# EUROPÄISCHE PATENTANMELDUNG

(11) **EP 3 693 429 A1**
(43) Veröffentlichungstag der Anmeldung: **12.08.2020**
(21) Anmeldenummer: 20156127.1
(22) Anmeldetag: 07.02.2020
(51) Int. Cl.: C09J 7/20, C09J 7/21

(54) **THERMISCH HÄRTBARES KLEBEBAND UND VERFAHREN ZUM UMMANTELN VON LANGESTRECKTEM GUT, INSBESONDERE LEITUNGEN**

(30) Priorität: 08.02.2019 DE 102019103124
(71) Anmelder: tesa SE, 22848 Norderstedt (DE)
(72) Erfinder: Klingeberg, Kerstin, 22527 Hamburg (DE); Guldbrandsen, Lars, 22885 Barsbüttel (DE); Külper, Klaus, 25421 Pinneberg (DE); Simonis, Heike, 22299 Hamburg (DE)

(57) **Zusammenfassung**

Die vorliegende Erfindung betrifft ein Klebeband und ein Verfahren zum Ummanteln von langgestrecktem Gut, insbesondere Kabelsätzen. Das Klebeband muss innerhalb der Prozeßvorgaben zur Weiterverarbeitung, z.B. innerhalb von 6 Min. aushärten und nach dem Aushärten die geforderten Anforderungen an Formstabilität aufweisen. Andererseits dürfen die Klebemassen nicht schon bei der Lagerung aushärten, da sie ansonsten nicht mehr verwendbar sind. Auch dürfen die Aushärtungstemperaturen nicht zu hoch liegen, da ansonsten die Leitungsisolierungen, die oft aus PVC sind, Schaden nehmen können. Erfindungsgemäß wird ein Klebeband zum Ummanteln von langgestrecktem Gut vorgeschlagen, umfassend einen bandförmigen Träger, der auf mindestens einer Seite mit einer selbstklebenden Klebeschicht versehen ist, die aus einem Haftklebestoff besteht, das dadurch gekennzeichnet, ist dass der bandförmige Träger auf mindestens einer Seite zusätzlich mit einem bei einer Temperatur von bis zu 110°C thermisch härtbaren Bindemittel versehen ist. Gegenstand der vorliegenden Erfindung ist auch ein Verfahren zum Ummanteln von langgestrecktem Gut wie insbesondere Leitungen oder Kabelsätzen, wobei ein Klebeband wie zuvor beschrieben in einer Schraubenlinie um das langgestreckte Gut geführt wird oder das langgestreckte Gut in axialer Richtung von dem Klebeband umhüllt wird, das langgestreckte Gut mitsamt dem umhüllenden Klebeband in die gewünschte Anordnung, insbesondere in den Kabelsatzplan gebracht wird, das langgestreckte Gut in dieser Anordnung gehalten wird, die aushärtbare Klebemasse durch die Zufuhr von Wärme bei einer Temperatur von bis zu 110°C zum Aushärten gebracht wird.

## Beschreibung

Die Erfindung betrifft ein Klebeband und ein Verfahren zum Ummanteln von langgestrecktem Gut, insbesondere Kabelsätzen.

Seit geraumer Zeit werden in der Industrie Klebebänder zur Herstellung von Kabelbäumen verwendet. Die Klebebebänder werden zum Bündeln einer Vielzahl von elektrischen Leitungen vor dem Einbau oder in bereits montiertem Zustand eingesetzt, um beispielsweise den Raumbedarf des Leitungsbündels durch Bandagieren zu reduzieren und zusätzlich Schutzfunktionen wie Schutz gegen mechanische und/oder thermische Beanspruchung zu erreichen. Gängige Formen von Klebebändern umfassen Folien- oder Textilträger, die in der Regel einseitig mit Haftklebemassen beschichtet sind. Klebebänder zum Ummanteln von langgestreckten Gütern sind beispielsweise aus der EP 1 848 006 A2, der DE 10 2013 213 726 A1, und der EP 2 497 805 A1 bekannt.

Derzeitige mit Klebeband umwickelte Kabelsätze sind in der Regel flexibel. Dies ist jedoch aus fertigungstechnischen Gründen oft unerwünscht. In der Fertigung werden die Kabelstränge in der Regel zu einem Kabelplan vorgefertigt und dann in das zu bestückende Objekt wie beispielsweise Automobile eingesetzt. Ein Kabelsatzplan entspricht der tatsächlichen räumlichen Anordnung der einzelnen Kabelstränge in dem Kabelsatz, also welcher Kabelstrang an welcher Stelle in welchem Winkel gebogen ist, wo sich Positionen von Abzweigen oder Ausbindungen befinden und mit welchen Steckern die Enden der Kabelstränge belegt sind.

Um die einzelnen Stränge des Kabelsatzes in einer bestimmten Form zu halten, so dass sie zum Beispiel im Motorraum um den Motor herumgeführt werden können, ohne mit dem Motor in Kontakt zu kommen, werden um den mit Klebeband umwickelten Kabelbaum üblicherweise nachträglich Spritzgussteile angebracht.

Diese Spritzgussteile haben aber den Nachteil, dass ein zusätzlicher Material- und Montageaufwand anfällt.

In der WO 2015/004190 A1 wird ein Verfahren zum Ummanteln von langgestrecktem Gut wie insbesondere Leitungen oder Kabelsätzen offenbart, bei dem das langgestreckte Gut mit einem Klebeband mit darauf aufgebrachter aushärtbarer Klebemasse in einer Schraubenlinie oder in axialer Richtung umhüllt wird und die auf dem Klebeband aufgebrachte Klebemasse durch Zufuhr von Strahlungsenergie wie Wärme ausgehärtet wird. Zur thermischen Aushärtung wird dabei eine Temperatur von 175°C angewendet.

Nachteilig bei diesem Verfahren ist die hohe Aushärtungstemperatur, die bei der Montage von Kabelsträngen während des Fertigungsprozesses beispielsweise in der Automobilindustrie wenig praktikabel ist, insbesondere weil die oft aus PVC gefertigten Kabelisolierungen beschädigt werden können. Folglich werden bislang Kabelpläne in vorgefertigen Spritzgussformen verlegt. Dies ist mit hohem Fertigungsaufwand verbunden.

Daher sind Klebebänder wünschenswert, deren Klebemassen bei höchstens 110°C, bevorzugt höchstens 100°C, weiter bevorzugt zwischen 60°C und 100°C aushärten, damit die Umhüllung von Klebebändern in den Fertigungsprozess der Kabelbäume bzw. Kabelpläne integriert werden kann. Die Klebebänder müssen innerhalb der Prozessvorgaben zur Weiterverarbeitung, z.B. innerhalb von 6 Min. aushärten und nach dem Aushärten die geforderten Anforderungen an Formstabilität aufweisen. Andererseits dürfen die Klebemassen nicht schon bei der Lagerung aushärten, da sie ansonsten nicht mehr verwendbar sind.

Aufgabe der vorliegenden Erfindung ist es daher ein Klebeband zum Ummanteln von langgestrecktem Gut zur Verfügung zu stellen, das die oben beschriebenen Anforderungen erfüllt. Aufgabe der vorliegenden Erfindung ist es auch ein Verfahren zum Ummanteln von langgestrecktem Gut unter Verwendung des erfindungsgemäßen rigiden Klebebands sowie ein mit dem Verfahren erhältliches Produkt zur Verfügung zu stellen.

Zur Lösung der technischen Probleme wird ein Klebeband zum Ummanteln von langgestrecktem Gut vorgeschlagen, umfassend einen bandförmigen Träger, der auf mindestens einer Seite mit einer selbstklebenden Klebeschicht versehen ist, die aus einem Haftklebestoff besteht, das dadurch gekennzeichnet ist, dass der bandförmige Träger auf mindestens einer Seite zusätzlich mit einem bei einer Temperatur von bis zu 110°C thermisch härtbaren Bindemittel versehen ist.

Gemäß einer weiteren Ausführungsform ist das Bindemittel bei einer Temperatur von 60°C bis 110°C, vorzugsweise von 60°C bis 100°C thermisch härtbar.

Gemäß einer Ausführungsform der Erfindung handelt es sich bei dem langgestreckten Gut um einen Kabelstrang, der ein Bündel aus mehreren Kabeln, wie 3 bis 1000 Kabeln, bevorzugt 10 bis 500 Kabeln, insbesondere zwischen 50 und 300 Kabeln umfasst.

Gemäß einer Ausführungsform umfasst das **Bindemittel** ein Polymerisat, welches zu mindestens 5 Gew.-% aus einer ethylenisch ungesättigten Monocarbonsäure, einer ethylenisch ungesättigten Dicarbonsäure oder einem ethylenisch ungesättigten Dicarbonsäureanhydrid sowie aus mono- oder multifunktionellen Epoxidverbindungen als Härter und zusätzlich einem Polyol oder einem Alkanolamin mit mindestens zwei Hydroxylgruppen aufgebaut ist.

Gemäß einer weiteren Ausführungsform umfasst das Bindemittel (a) 0 bis 100 Gew.-% eines ethylenisch ungesättigten Säureanhydrids oder einer ethylenisch ungesättigten Dicarbonsäure, deren Carbonsäuregruppen eine Anhydridgruppe bilden können, oder Gemischen davon, (b) 100 bis 0 Gew.-% einer ethylenisch ungesättigten Verbindung, (c) mindestens einen polyfunktionellen Vernetzer oder Gemische davon, wobei die durch radikalische Polymerisation erhaltenen Polymerisate aus (a) und (b) bei Einordnung in ein Koordinatensystem über ihr mittleres Molekulargewicht Mw und ihre Polydispersitätswerte, in der Fläche oberhalb einer Gerade liegen, die über die Geradengleichung y = 1,25x + 20000 definiert ist und in y-Richtung parallel um mindestens + 3000, bevorzugt um 5000, besonders bevorzugt um 10 000 verschoben wurde, wobei die x-Achse das Gewichtsmittel des Molekulargewichtes und die y-Achse die Polydispersität mal 10000 bezeichnet. Derartige Bindemittel werden in der DE 103 42 858 A1 beschrieben, auf die hier vollständig Bezug genommen wird. Als Säureanhydride sind Dicarbonsäureanhydride bevorzugt, insbesondere werden bevorzugt Maleinsäure, Fumarsäure, Maleinsäureanhydrid, Itacon-säure, 1,2,3,6-Tetrahydrophthalsäure, 1,2,3,6-Tetrahydro-phthalsäureanhydrid, deren Alkali- und Ammoniumsalze oder Mischungen daraus. Besonders bevorzugt sind Maleinsäure und Maleinsäureanhydrid. Ethylenisch ungesättigte Verbindungen sind bevorzugt Monoethylenisch ungesättigte C₃- bis C₁₀-Monocarbonsäuren, wie z.B. Acrylsäure, Methacrylsäure, Ethylacrylsäure, Allylessigsäure, Crotonsäure, Vinylessigsäure, Maleinsäurehalbester wie Maleinsäuremonomethylester, deren Mischungen bzw. deren Alkali- und Ammoniumsalze, insbesondere Bevorzugte Monomere sind Acrylsäure, Methacrylsäure, Ester der Acryl- oder Methacrylsäure (z.B. Methyl(meth)acrylat, Ethyl(meth)acrylat, Butyl(meth)acrylat) Ethen, Propen, Buten, Isobuten, Cyclopenten, Methylvinylether, Ethylvinylether, Acrylamid, 2-Acrylamido-2-methylpropansulfonsäure, Vinylacetat, Styrol, Butadien, Acrylnitril, Maleinsäuremonomethylester bzw. Mischungen davon.

Gemäß einer weiteren Ausführungsform umfasst das Bindemittel ein Emulsionspolymerisat, ein Polymerisat, welches zu mindestens 5 Gew.-% aus einer ethylenisch ungesättigten Monocarbonsäure, Dicarbonsäure oder Dicarbonsäureanhydrid aufgebaut ist, und mono- oder multifunktionelle Epoxidverbindungen als Härter, wie in der DE 101 51 569 A1 beschrieben, auf die hier vollständig Bezug genommen wird. Das Emulsionspolymerisat umfasst Polymere, ausgewählt aus C₁-C₂₀-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und 1 oder 2 Doppelbindungen oder Mischungen dieser Monomeren. Der Anteil von Monomeren mit Carbonsäuregruppen oder Carbonsäureanhydridgruppen liegt im allgemeinen unter 10 Gew.-%, insbesondere unter 5 Gew.-%, bezogen auf das Polymerisat.

Gemäß einer weiteren Ausführungsform umfasst das Bindemittel mindestens ein Polymerisat, das 0 bis 5 Gew.-% einer α,β-ethylenisch ungesättigten Mono- oder Dicarbonsäure einpolymerisiert enthält, und das erhältlich ist durch radikalische Polymerisation in Gegenwart von (a) wenigstens einem durch radikalische Polymerisation erhältlichen Polymerisat, das 15 bis 100 Gew.-% einer α,β-ethylenisch ungesättigten Mono- oder Dicarbonsäure einpolymerisiert enthält, und (b) wenigstens einem Amin, das mindestens eine lange Kette mit wenigstens sechs Kohlenstoffatomen umfasst, wie in der DE 197 29 161 A1 beschrieben, auf die hier vollständig Bezug genommen wird.

Gemäß einer weiteren Ausführungsform umfasst das Bindemittel ein wässriges Bindemittel, enthaltend (a) 0 bis 100 Gew.-% eines ethylenisch ungesättigten Säureanhydrids oder einer ethylenisch ungesättigten Dicarbonsäure, deren Carbonsäure-gruppen eine Anhydridgruppe bilden können, oder Gemischen davon, (b) 100 bis 0 Gew.-% einer ethylenisch ungesättigten Verbindung, (c) mindestens einen polyfunktionellen Vernetzer oder Gemische davon sowie (d) 1 bis 80 Gew.-% einer wässrigen Polymerdispersion, wie in der DE 10 2004 061 144 A1 beschrieben, auf die hier vollständig Bezug genommen wird.

Geeignete bei Temperatur von bis zu 110°C thermisch härtbaren Bindemittel sind beispielsweise unter der Bezeichnung Acrodur® von der BASF SE, Deutschland erhältlich. Besonders bevorzugt sind formaldehydfreie Harzlösung mit mehr als 10%, bevorzugt mehr als 25%, wie etwa 30% Feststoffgehalt aus modifizierter Polyacrylsäure und einem mehrwertigen Alkohol, beispielsweise Acrodur® 950L von der BASF SE.

Als **Träger** können alle bekannten Folien und textilen Träger wie Gestricke, Gelege, Bänder, Geflechte, Nadelflortextilien, Filze, Gewebe (umfassend Leinwand-, Köper und Atlasbindung), Gewirke (umfassend Kettenwirkware und Strickware) oder Vliese verwendet werden, wobei unter "Vlies" zumindest textile Flächengebilde gemäß EN 29092 (1988) sowie Nähwirkvliese und ähnliche Systeme zu verstehen sind. Besonders vorteilhaft ist ein Klebeband, bei dem als Träger ein Gewebe, ein Vlies oder ein Gewirke eingesetzt wird. Derartige Träger sind beispielsweise in der WO 2015/004190 A1 beschrieben, auf die hier vollständig Bezug genommen wird.

Des Weiteren können Abstandsgewebe und -gewirke mit Kaschierung verwendet werden. Derartige Abstandsgewebe werden in der EP 0 071 212 B1 offenbart. Abstandsgewebe sind mattenförmige Schichtkörper mit einer Deckschicht aus einem Faseroder Filamentvlies, einer Unterlagsschicht und zwischen diesen Schichten vorhandene einzelne oder Büschel von Haltefasern, die über die Fläche des Schichtkörpers verteilt durch die Partikelschicht hindurchgenadelt sind und die Deckschicht und die Unterlagsschicht untereinander verbinden.

Als Vliesstoffe kommen besonders verfestigte Stapelfaservliese, jedoch auch Filament-, Meltblown sowie Spinnvliese in Frage, die meist zusätzlich zu verfestigen sind. Als mögliche Verfestigungsmethoden sind für Vliese die mechanische, die thermische sowie die chemische Verfestigung bekannt. Besonders vorteilhaft haben sich Vliese erwiesen, die insbesondere durch ein Übernähen mit separaten Fäden oder durch Vermaschen verfestigt sind. Derartige verfestigte Vliese werden beispielsweise auf Nähwirkmaschinen des Typs "Malimo" der Firma Karl Mayer, ehemals Malimo, hergestellt und sind unter anderem bei der Firma Hoftex Group AG beziehbar.

Als Träger kann weiterhin ein Vlies vom Typ Kunit oder Multiknit verwendet werden. Ein Kunitvlies ist dadurch gekennzeichnet, dass es aus der Verarbeitung eines längsorientierten Faservlieses zu einem Flächengebilde hervorgeht, das auf einer Seite Maschen und auf der anderen Maschenstege oder Polfaser-Falten aufweist, aber weder Fäden noch vorgefertigte Flächengebilde besitzt. Auch ein derartiges Vlies wird beispielsweise auf Nähwirkmaschinen des Typs "Malimo" der Firma Karl Mayer schon seit längerer Zeit hergestellt.

Ein Multiknitvlies ist gegenüber dem Kunitvlies dadurch gekennzeichnet, dass das Vlies durch das beidseitige Durchstechen mit Nadeln sowohl auf der Ober- als auch auf der Unterseite eine Verfestigung erfährt. Als Ausgangsprodukt für ein Multiknit dienen in der Regel ein beziehungsweise zwei nach dem Kunit-Verfahren hergestellte einseitig vermaschte Polfaser-Vlieswirkstoffe. Im Endprodukt sind beide Vliesstoffoberseiten durch Faservermaschungen zu einer geschlossenen Oberfläche geformt und durch nahezu senkrecht stehenden Fasern miteinander verbunden. Die zusätzliche Einbringbarkeit weiterer durchstechbarer Flächengebilde und/oder streufähiger Medien ist gegeben.

Schließlich sind auch Nähvliese als Vorprodukt geeignet, einen erfindungsgemäßen Träger und ein erfindungsgemäßes Klebeband zu bilden. Ein Nähvlies wird aus einem Vliesmaterial mit einer Vielzahl parallel zueinander verlaufender Nähte gebildet. Diese Nähte entstehen durch das Einnähen oder Nähwirken von durchgehenden textilen Fäden. Für diesen Typ Vlies sind Nähwirkmaschinen des Typs "Malimo" der Firma Karl Mayer bekannt.

Besonders geeignet sind auch Nadelvliese. Beim Nadelvlies wird ein Faserflor zu einem Flächengebilde mit Hilfe von mit Widerhaken versehenen Nadeln. Durch wechselndes Einstechen und Ausziehen der Nadeln wird das Material auf einem Nadelbalken verfestigt, wobei sich die Einzelfasern zu einem festen Flächengebilde verschlingen.

Weiterhin besonders vorteilhaft ist ein Stapelfaservlies, das im ersten Schritt durch mechanische Bearbeitung vorverfestigt wird oder das ein Nassvlies ist, das hydrodynamisch gelegt wurde, wobei zwischen 2 Gew.-% und 50 Gew.-% der Fasern des Vlieses Schmelzfasern sind, insbesondere zwischen 5 Gew.-% und 40 Gew.-% der Fasern des Vlieses. Ein derartiges Vlies ist dadurch gekennzeichnet, dass die Fasern nass gelegt werden oder zum Beispiel ein Stapelfaservlies durch die Bildung von Maschen aus Fasern des Vlieses durch Nadelung, Vernähung, Luft und/oder Wasserstrahlbearbeitung vorverfestigt wird. In einem zweiten Schritt erfolgt die Thermofixierung, wobei die Festigkeit des Vlieses durch das Auf- oder Anschmelzen der Schmelzfasern nochmals erhöht wird.

Vorteilhaft und zumindest bereichsweise weist der Träger eine ein- oder beidseitig glattgeschliffene Oberfläche auf, vorzugsweise jeweils eine vollflächig glattgeschliffene Oberfläche. Die glattgeschliffene Oberfläche mag gechintzt sein, wie es beispielsweise in der EP 1 448 744 A1 erläutert wird. Auf diese Weise wird die Abweisbarkeit von Schmutz verbessert.

Als Ausgangsmaterialien für den Träger sind insbesondere (Chemie-)Fasern (Stapelfaser oder Endlosfilament) aus synthetischen Polymeren, auch synthetische Fasern genannt, aus Polyester wie Polyethylenterephthalat, Polyamid, Polyimid, Aramid, Polyolefin, Polyacrylnitril oder Glas, (Chemie)Fasern aus natürlichen Polymeren wie zellulosische Fasern (Viskose, Modal, Lyocell, Cupro, Acetat, Triacetat, Cellulon), wie Gummifasern, wie Pflanzeneiweißfasern und/oder wie Tiereiweißfasern und/oder natürliche Fasern aus Baumwolle, Sisal, Flachs, Seide, Hanf, Leinen, Kokos oder Wolle vorgesehen. Die vorliegende Erfindung ist aber nicht auf die genannten Materialien beschränkt, sondern es können, für den Fachmann erkenntlich ohne erfinderisch tätig werden zu müssen, eine Vielzahl weiterer Fasern zur Herstellung des Vlieses eingesetzt werden.

Des Weiteren sind Garne, gefertigt aus den angegebenen Rohstoffen, ebenfalls geeignet. Bei Geweben oder Gelegen können einzelne Fäden aus einem Mischgarn hergestellt werden, also synthetische und natürliche Bestandteile aufweisen. In der Regel sind die Kettfäden und die Schussfäden jedoch jeweils sortenrein ausgebildet.

Bevorzugt wird als Material für den Träger Polyester verwendet, aufgrund der hervorragenden Alterungsbeständigkeit und der hervorragenden Medienbeständigkeit gegenüber Chemikalien und Betriebsmitteln wie Öl, Benzin, Frostschutzmittel u.ä. Darüber hinaus hat Polyester den Vorteil, dass sie zu einem sehr abriebfesten und temperaturbeständigen Träger führen, was für den speziellen Einsatzzweck zur Bündelung von Kabeln in Automobilen und beispielsweise im Motorraum von besonderer Wichtigkeit ist. Gemäß einer Ausführungsform der Erfindung wird als Träger ein PET-Vlies oder ein PET-Gewebe verwendet.

Vorteilhaft liegt das Flächengewicht des textilen Trägers zwischen 30 g/m² und 300 g/m² weiter vorteilhaft zwischen 50 g/m² und 200 g/m², besonders vorteilhaft zwischen 50 g/m² und 150 g/m², ganz besonders vorteilhaft zwischen 70 g/m² und 130 g/m².

Gemäß einer besonders vorteilhaften Ausführungsform der Erfindung werden als Träger ein Gewebe oder ein Vlies aus Polyester eingesetzt, die ein Flächengewicht zwischen 50 g/m² und 150 g/m² aufweisen.

Vorteilhaft liegt der Masseauftrag des auf den Träger aufgebrachten und/oder in den Träger eingebrachten Bindemittels zwischen 30 g/m² und 300 g/m², weiter vorteilhaft zwischen 40 g/m² und 200 g/m², besonders vorteilhaft zwischen 50 g/m² und 200 g/m².

Das Einbringen in den Träger, insbesondere in einen Vlies- oder Gewebeträger kann beispielsweise durch Tränken des Trägers mit der UV-härtbaren Zusammensetzung erfolgen.

Der **Haftklebstoff** ist eine Haftklebemasse, also eine Klebemasse, die bereits unter relativ schwachem Andruck eine dauerhafte Verbindung mit fast allen Haftgründen erlaubt und nach Gebrauch im Wesentlichen rückstandsfrei vom Haftgrund wieder abgelöst werden kann. Eine Haftklebemasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebemasse beruht auf ihren adhäsiven Eigenschaften und die Wiederablösbarkeit auf ihren kohäsiven Eigenschaften.

Erfindungsgemäß wird als Haftklebstoff eine Strukturklebemasse (Konstruktionsklebstoff, Montageklebstoff) verwendet (siehe Römpp, Georg Thieme Verlag, Dokumentkennung RD-19-04489, letzte Aktualisierung: September 2012). Nach DIN EN 923: 2006-01 sind Strukturklebstoffe Klebstoffe, die Klebverbindungen bilden, die in einem Gefüge für eine vorgegebene längere Zeitspanne eine festgelegte Festigkeit beibehalten können (nach ASTM-Definition: *"bonding agents used for transferring required loads between adherends exposed to Service environments typical for the structure involved"*). Es sind also Klebstoffe für chemisch und physikalisch hoch beanspruchbare Klebungen, die im ausgehärteten Zustand zur Verfestigung der geklebten Substrate beitragen und zur Herstellung von Konstruktionen aus Metallen, Keramik, Beton, Holz oder verstärkten Kunststoffen verwendet werden. Die erfindungsgemäßen Strukturklebstoffe basieren insbesondere auf Reaktionsklebstoffen (Phenolharze, Epoxidharze, Polyimide, Polyurethane und andere).

Die Klebemasse kann nach dem Aushärten elastisch sein, um eine dauerhafte, gegen Schwingungen und Verwindungen unempfindliche Ummantelung sicherzustellen.

Bevorzugt sind Haftklebstoffe, wie sie in den veröffentlichten europäischen Patentanmeldungen EP 2 520 627 A1, EP 2 522 705 A1, EP 2 520 628 A1, EP 2 695 926 A1, EP 2 520 629 A1 und EP 3 433 330 A1 beschrieben werden, auf die hier diesbezüglich Bezug genommen wird.

Gemäß einer ersten Ausführungsform liegt die Haftklebemasse in Form einer getrockneten Polymerdispersion vor, wobei das Polymer aufgebaut ist aus: 5 bis 25 Gew.-%, vorzugsweise 10 bis 22 Gew.-% Ethylen, 30 bis 69 Gew.-%, vorzugsweise 40 bis 60 Gew.-% Alkylacrylatester mit C₄- bis C₁₂-Alkylresten, 20 bis 55 Gew.-%, vorzugsweise 28 bis 38 Gew.-% Vinylacetat, 0 bis 10 Gew.-% andere ethylenisch ungesättigte Verbindungen und die Haftklebemasse zwischen 15 und 100 Gewichtsteile eines Klebrigmachers (bezogen auf die Masse der getrockneten Polymerdispersion) enthält, wie in EP 2 520 627 A1 beschrieben. Bevorzugt handelt es sich bei dem Alkylacrylatester um n-Butylacrylat und/oder 2-Ethylhexyl-acrylat. Andere ethylenisch ungesättigte Verbindungen umfassen Alkyl(meth)acrylate, bevorzugt C₁- bis C₂₀-Alkyl (meth) acrylate mit Ausnahme der die Alkylacrylatester mit C₄- bis C₁₂-Alkylresten bildenden Monomere, aromatische Vinylmonomere wie Styrol, α-Methylstyrol und Vinyltoluol, C₁- bis C₁₀-Hydroxyalkyl(meth)acrylate wie insbesondere Hydroxyethyl- oder Hydroxypropyl(meth)acrylat, Vinylester aus bis zu 20 Kohlenstoffatomen enthaltenden Carbonsäuren wie Vinyllaurat, Vinylether aus bis zu 10 Kohlenstoffatomen enthaltenden Alkoholen wie Vinylmethylether oder Vinylisobutylether, Vinylhalogenide wie Vinylchlorid oder Vinylidendichlorid, Säureamide wie Acrylamid oder Methacrylamid und ungesättigte Kohlenwasserstoffe mit 3 bis 8 Kohlenstoffatomen wie Propen, Butadien, Isopren, 1-Hexen oder 1-Octen oder deren Mischungen. Darüber hinaus können dem Polymer als Monomer weiterhin vorteilhafterweise ein di- oder mehrfunktionelles Monomer zugesetzt sein, und zwar vorzugsweise zu 0 bis 2 Gew.-% und besonders vorzugsweise zu 0 bis 1 Gew.-%. Beispiele für mehrfunktionale ethylenisch ungesättigte Monomere (e) sind Divinylbenzol, Alkyldiacrylate wie 1,2-Ethylenglykoldiacrylat, 1,4-Butandioldiacrylat, 1,6-Hexandioldiacrylat, 1,8-Octandioldiacrylat oder 1,12-Dodecandioldiacrylat, Triacrylate wie Trimethylolpropantri-acrylat und Tetraacrylate wie Pentaerythritoltetraacrylat. Die Polymerdispersion wird hergestellt durch das Verfahren der Emulsionspolymerisation der genannten Komponenten. Besonders bevorzugte Ausführungsformen und ausführliche Beschreibungen der Einsatzstoffe sowie der Herstellungsverfahren findet man in EP 0 017 986 B1 sowie EP 0 185 356 B1.

Gemäß einer weiteren Ausführungsform liegt die Haftklebemasse in Form einer getrockneten Polymerdispersion vor, wobei das Polymer aufgebaut ist aus: (a) 90 bis 99 Gew.-% n-Butylacrylat und/oder 2-Ethylhexylacrylat, bevorzugt 2-Ethylhexylacrylat, (b) 0 bis 10 Gew.-% eines ethylenisch ungesättigten Monomers mit einer Säure- oder Säureanhydridfunktion, (c) 10 bis 1 Gew.-% eines oder mehreren von (a) und (b) verschiedenen ethylenisch ungesättigten monofunktionellen Monomeren, wie Acrylnitril und/oder Methacrylnitril, (d) 0 bis 1 Gew.-% eines di- oder mehrfunktionellen Monomers und die Haftklebemasse zwischen 15 und 100 Gewichtsteile eines Klebrigmachers (bezogen auf die Masse der getrockneten Polymerdispersion) enthält, wie in EP 2 522 705 A1 beschrieben. Eine besonders bevorzugte Ausführungsform der Erfindung umfasst also eine Mischung aus 2-Ethylhexylacrylat als Monomer (a) und Acrylnitril als Monomer (c). Als Monomer (b) kommen vorteilhaft in Betracht zum Beispiel Acrylsäure, Methacrylsäure, Itaconsäure, Maleinsäure, Fumarsäure und/oder Maleinsäureanhydrid. Bevorzugt sind Acrylsäure oder Methacrylsäure, gegebenenfalls die Mischung aus beiden. Beispiele für mehrfunktionale ethylenisch ungesättigte Monomere (d) sind Divinylbenzol, Alkyldiacrylate wie 1,2-Ethylenglykoldiacrylat, 1,4-Butandioldiacrylat, 1,6-Hexandioldiacrylat, 1,8-Octandioldiacrylat oder 1,12-Dodecandioldiacrylat, Triacrylate wie Trimethylolpropantriacrylat und Tetraacrylate wie Pentaerythritoltetraacrylat. Die Polymerdispersion wird hergestellt durch das Verfahren der Emulsionspolymerisation der genannten Komponenten. Beschreibungen dieses Verfahrens werden zum Beispiel gegeben in der EP 1 378 527 B1 beschrieben.

Gemäß einer weiteren Ausführungsform liegt die Haftklebemasse in Form einer getrockneten Polymerdispersion vor, wobei das Polymer aufgebaut ist aus: (a) 40 bis 90 Gew.-% n-Butylacrylat und/oder 2-Ethylhexylacrylat, bevorzugt (b) 2-Ethylhexylacrylat, 0 bis 10 Gew.-% eines ethylenisch ungesättigten Monomers mit einer Säure- oder Säureanhydridfunktion, (c) 60 bis 10 Gew.-% eines oder mehreren von (a) und (b) verschiedenen ethylenisch ungesättigten monofunktionellen Monomeren, (d) 0 bis 1 Gew.-% eines di- oder mehrfunktionellen Monomers und die Haftklebemasse zwischen 15 und 100 Gewichtsteile eines Klebrigmachers (bezogen auf die Masse der getrockneten Polymerdispersion) enthält, wie in EP 2 520 628 A1 beschrieben. Als Monomer (b) kommen vorteilhaft in Betracht zum Beispiel Acrylsäure, Methacrylsäure, Itaconsäure, Maleinsäure, Fumarsäure und/oder Maleinsäureanhydrid. Bevorzugt sind Acrylsäure oder Methacrylsäure, gegebenenfalls die Mischung aus beiden. Unter Monomere (c) fallen Alkyl(meth)acrylate, bevorzugt C₁- bis C₂₀-Alkyl (meth) acrylate mit Ausnahme der (a) bildenden Monomere, aromatische Vinylmonomere wie Styrol, α-Methylstyrol und Vinyltoluol, C₁- bis C₁₀-Hydroxyalkyl-(meth)acrylate wie insbesondere Hydroxyethyl- oder Hydroxypropyl(meth)acrylat, Vinylester aus bis zu 20 Kohlenstoffatomen enthaltenden Carbonsäuren wie Vinylacetat oder Vinyllaurat, Vinylether aus bis zu 10 Kohlenstoffatomen enthaltenden Alkoholen wie Vinylmethylether oder Vinylisobutylether, Vinylhalogenide wie Vinylchlorid oder Vinylidendichlorid, Säureamide wie Acrylamid oder Methacrylamid und ungesättigte Kohlenwasserstoffe mit 2 bis 8 Kohlenstoffatomen wie Ethylen, Propen, Butadien, Isopren, 1-Hexen oder 1-Octen. Erfindungsgemäß besonders bevorzugt ist Ethylacrylat. Beispiele für mehrfunktionale ethylenisch ungesättigte Monomere (d) sind Divinylbenzol, Alkyldiacrylate wie 1,2-Ethylenglykoldiacrylat, 1,4-Butandioldiacrylat, 1,6-Hexandioldiacrylat, 1,8-Octandioldiacrylat oder 1,12-Dodecandioldiacrylat, Triacrylate wie Trimethylolpropantriacrylat und Tetraacrylate wie Pentaerythritoltetraacrylat. Die Polymerdispersion wird hergestellt durch das Verfahren der Emulsionspolymerisation der genannten Komponenten. Beschreibungen dieses Verfahrens werden zum Beispiel gegeben in der EP 1 378 527 B1 beschrieben.

Gemäß einer weiteren Ausführungsform liegt die Haftklebemasse in Form einer getrockneten und Elektronenstrahl (ESH) vernetzten polymeren Acrylatdispersion, insbesondere einer wässrigen Acrylatdisperion, bevorzugt mit einem Gelwert von größer gleich 40 %, bestimmt mittels Soxhlet-Extraktion, wobei die polymere Acrylatdispersion Polymere umfasst, die aufgebaut sind aus (a) monomeren Acrylaten und optional (b) ethylenisch ungesättigten Comonomeren, die keine Acrylate sind, wobei die Haftklebemasse zwischen 15 und 100 Gewichtsteile eines Klebrigmachers (bezogen auf die Masse der getrockneten polymeren Dispersion) enthält, wie in EP 2 695 926 A1 beschrieben.

Gemäß einer weiteren Ausführungsform weist die Haftklebemasse eine Scherviskosität ei einer Temperatur von 25°C während der Beschichtung aus Dispersion 200 bis 100.000 Pa·s bei einer Schergeschwindigkeit von 10⁻² s⁻¹ und 0,1 bis 10 Pa·s bei einer Schergeschwindigkeit von 100 s⁻¹ auf. Die Haftklebemasse besteht vorzugsweise aus einer wässrigen Acrylatdispersion, also einem in Wasser fein dispergierten Polyacrylsäureester mit Haftklebeeigenschaften, wie sie zum Beispiel im Handbook of Pressure Sensitive Technology von D. Satas beschrieben sind. Acrylathaftklebemassen sind typischerweise radikalisch polymerisierte Copolymere aus Acrylsäurealkylestern oder Methacrylsäurealkylestern von C₁- bis C₂₀-Alkoholen wie zum Beispiel Methylacrylat, Ethyl(meth)acrylat, n-Butyl(meth)acrylat, t-Butyl(meth)acrylat, Cyclohexyl(meth)-acrylat, 2-Ethylhexyl(meth)acrylat, n-Octyl(meth)acrylat, iso-Octyl(meth)acrylat, n-Decyl(meth)acrylat, n-Dodecyl(meth)-acrylat, Tetradecyl-(meth)acrylat, Lauryl(meth)acrylat, Oleyl-(meth)acrylat, Palmityl-(meth)acrylat und Stearyl(meth)acrylat neben weiteren (Meth)acrylsäureestern wie Isobornyl-(meth)acrylat, Benzyl(meth)acrylat, Phenyl(meth)acrylat und 2-Bromoethyl(meth)acrylat, Alkoxyalkyl(meth)acrylate wie Ethoxyethyl(meth)acrylat. Weiterhin fallen darunter Ester von ethylenisch ungesättigten Di- und Tricarbonsäuren und Anhydriden wie Ethylmaleat, Dimethylfumarat und Ethyl-methylitaconat. Ebenfalls fallen vinylaromatische Monomere wie zum Beispiel Styrol, Vinyltoluol, Methylstyrol, n-Butylstyrol, Decylstyrol darunter, wie in der EP 2 520 629 A1 beschrieben.

Gemäß einer weiteren Ausführungsform liegt die Haftklebemasse in Form einer getrockneten Polymerdispersion vor, wobei das Polymer aufgebaut ist aus: (a) 95,0 bis 100,0 Gew.-% n-Butylacrylat und/oder 2-Ethylhexylacrylat und (b) 0,0 bis 5,0 Gew.-% eines ethylenisch ungesättigten Monomers mit einer Säure- oder Säureanhydridfunktion, wie in der EP 2 433 330 A1 beschrieben. Vorzugsweise besteht das Polymer aus 95,0 bis 99,5 Gew.-% n-Butylacrylat und/oder 2-Ethylhexylacrylat und 0,5 bis 5 Gew.-% eines ethylenisch ungesättigten Monomers mit einer Säure- oder Säureanhydridfunktion, weiter vorzugsweise aus 98,0 bis 99,0 Gew.-% n-Butylacrylat und/oder 2-Ethylhexylacrylat und 1,0 bis 2,0 Gew.-% eines ethylenisch ungesättigten Monomers mit einer Säure- oder Säureanhydridfunktion. Neben den aufgeführten Acrylatpolymeren können der Haftklebemasse neben gegebenenfalls vorhandenen Restmonomeren zusätzlich die weiter unten erwähnten Klebrigmacher und/oder Zuschlagstoffe wie Lichtschutz- oder Alterungsschutzmitteln in den ebenfalls unten genannten Mengen zugesetzt werden. Insbesondere sind keine weiteren Polymere wie Elastomere in der Haftklebemasse enthalten, das heißt, das die Polymere der Haftklebemasse bestehen nur aus den Monomeren (a) und (b) in den angegebenen Mengenverhältnissen.

Gemäß einer weiteren Ausführungsform liegt die Haftklebemasse in Form einer getrockneten und Polymerdispersion vor, wobei das Polymer aufgebaut ist aus: (a) 97,0 bis 98,0 Gew.-% n-Butylacrylat und/oder 2-Ethylhexylacrylat, (b) 2,0 bis 3,0 Gew.-% eines ethylenisch ungesättigten Monomers mit einer Säure- oder Säureanhydrid-funktion. Vorzugsweise besteht das Polymer aus 97,2 bis 97,7 Gew.-% n-Butylacrylat und/oder 2-Ethylhexylacrylat, beborzugt n-Butylacrylat, und 2,3 bis 2,8 Gew.-% eines ethylenisch ungesättigten Monomers mit einer Säure- oder Säureanhydridfunktion. Als Monomer (b) kommen vorteilhaft in Betracht zum Beispiel Acrylsäure, Methacrylsäure, Itaconsäure, Maleinsäure, Fumarsäure und/oder Maleinsäureanhydrid.

Gemäß einer weiteren Ausführungsform sind die Haftklebemassen verntzerfrei. "Vernetzerfrei" im Sinne dieser Erfindung bedeutet, dass der Haftklebemasse keine zur Vernetzung befähigten Verbindungen zugesetzt werden. Wie hier verwendet, steht der Begriff Vernetzer für chemische Verbindungen, die imstande sind, Molekülketten miteinander zu verbinden, damit sich aus den zweidimensionalen Strukturen über Ausbildung intermolekularer Brücken dreidimensional-vernetzte Strukturen bilden können. Vernetzer sind solche - insbesondere bi- oder polyfunktionelle, meist niedermolekulare - Verbindungen, die unter den gewählten Vernetzungsbedingungen mit geeigneten - insbesondere funktionellen - Gruppen der zu vernetzenden Polymere reagieren können, somit zwei oder mehrere Polymere oder Polymerstellen miteinander verknüpfen ("Brücken" bilden) und somit ein Netzwerk aus dem zu vernetzenden Polymer beziehungsweise den zu vernetzenden Polymeren schaffen. Hierdurch kommt es in der Regel zur Kohäsionserhöhung. Typische Beispiele für Vernetzer sind chemische Verbindungen, die innerhalb des Moleküls oder an den beiden Molekülenden zwei oder mehr gleiche oder unterschiedliche funktionelle Gruppen aufweisen und folglich Moleküle gleicher oder auch unterschiedlicher Strukturen miteinander vernetzen können. Außerdem kann ein Vernetzer mit dem reaktiven Monomer oder Reaktivharz, wie oben definiert, reagieren, ohne dass es dabei zu einer Polymerisation im eigentlichen Sinne kommt. Denn im Gegensatz zum Aktivator, wie oben beschrieben, kann ein Vernetzer in das Polymer-Netzwerk eingebaut werden.

Vorteilhaft liegt der Masseauftrag der auf den Träger aufgebrachten und/oder in den Träger eingebrachten Klebemasse zwischen 30 g/m² und 300 g/m², weiter vorteilhaft zwischen 40 g/m² und 200 g/m², besonders vorteilhaft zwischen 50 g/m² und 130 g/m².

Die bei einer Temperatur von bis zu 110°C thermisch härtbaren **Bindemittel** ist beispielsweise aus der DE 101 51 569 A1 bekannt, auf die hier vollständig Bezug genommen wird. Vorzugsweise besteht das Emulsionspolymerisat (EP) zu mindestens 40 Gew.-%, besonders bevorzugt zu mindestens 60 Gew.-%, ganz besonders bevorzugt zu mindestens 80 Gew.-% aus sogenannten Hauptmonomeren. Die Hauptmonomeren sind ausgewählt aus C₁-C₂₀-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und 1 oder 2 Doppelbindungen oder Mischungen dieser Monomeren. Der Anteil von Monomeren mit Carbonsäuregruppen oder Carbonsäureanhydridgruppen liegt im allgemeinen unter 10 Gew.-%, insbesondere unter 5 Gew.-%, bezogen auf das Polymerisat.

Besonders bevorzugt ist ferner die Variante der Erfindung, bei der der Haftklebemasse keinerlei Klebharze zugesetzt sind.

Die Klebemasse und das Bindemittel können entweder in separaten Arbeitsgängen aufgetragen werden oder aber in einem Mehrschichtauftragsverfahren (Multi Layer Slot Die). Die Beschichtung erfolgt vorzugsweise neben der wasserbasierten Acrodur® auch mit einer wasserbasierten Haftklebmasse. Im Falle der Multilayer Beschichtung müssen die Viskositäten des Binders und der Klebmasse aufeinander und zum eingesetzten Träger abgestimmt werden.

Die Verarbeitungstemperatur des mit der Klebemasse und dem Bindemittel beschichteten Trägers sollte bei der Trocknung 60°C nicht überschreiten, um eine vorzeitige Reaktion zu verhindern. Gleiches gilt auf für die Lagerungstemperatur.

Das fertig beschichtete Material wird vorzugsweise in eine Breite von 20±2 mm (jede andere Breite ist ebenfalls denkbar) geschnitten und spiralförmig mit einer Überlappung von 50% um das in Form gebrachte Kabelbündel gewickelt. Für die Aktivierung des Acrodur ist eine Temperaturbeaufschlagung von 110°C für 10 min nötig. Die Temperaturbeaufschlagung kann durch Heißluftfön, IR-Strahler, Ofen, Heizmanschette, o.ä. erfolgen. Gemäß einer bevorzugten Ausführungsform der Erfindung ist die Klebemasse nach dem Aufbringen auf den Träger zu mehr als 10%, vorzugsweise zu mehr als 25%, weiter vorzugsweise zu mehr als 50% in den Träger eingesunken. Ein Zahlenwert von beispielsweise 25% bedeutet dabei, dass die Klebemasse über eine Schichtdicke von 25% der Dicke des textilen Trägers eingedrungen ist, also bei einem Träger mit einer Dicke von 100 µm über eine Schichtdicke von 25 µm innerhalb des Trägers, und zwar beginnend von der Fläche des Trägers, auf der die Klebemasse beschichtet ist, und in senkrechter Richtung zu der von der Längs-beziehungsweise Quererrichtung aufgespannten Ebene.

Das fertig beschichtete Material wird vorzugsweise mit einer Schutzfolie versehen.

Gegenstand der vorliegenden Erfindung ist auch ein Verfahren zum Ummanteln von langgestrecktem Gut wie insbesondere Leitungen oder Kabelsätzen, wobei ein Klebeband gemäß einem der vorangehenden Ansprüche in einer Schraubenlinie um das langgestreckte Gut geführt wird oder das langgestreckte Gut in axialer Richtung von dem Klebeband umhüllt wird, das langgestreckte Gut mitsamt dem umhüllenden Klebeband in die gewünschte Anordnung, insbesondere in den Kabelsatzplan gebracht wird, das langgestreckte Gut in dieser Anordnung gehalten wird, die aushärtbare Klebemasse durch die Zufuhr von Wärme bei einer Temperatur von bis zu 110°C, bevorzugt zwischen 60°C und 110°C zum Aushärten gebracht wird. Vorzugsweise wird die thermische Energie über einen Zeitraum von 0,5 Sek. bis 10 Min., vorzugsweise 2 Min. bis 6 Min. zugeführt, der mit den Taktzeiten des Fertigungsprozesses kompatibel ist, so dass das langgestreckte Gut vollständig ausgehärtet ist, sobald es im Zielobjekt wie Automobilen, Wasserfahrzeugen oder Flugzeugen verbaut wird.

Das Band wird vorzugsweise spiralförmig mit einer Überlappung von 30% bis 70%, bevorzugter 40 bis 50%, insbesondere etwa 50% um das langgestreckte Gut umwickelt.

Schließlich bezieht sich die vorliegende Erfindung auch auf einen mit dem erfindungsgemäßen, gehärteten Klebeband ummantelten Kabelstrang und auf einen nach dem erfindungsmäßen Verfahren hergestellten Kabelstrang.

### Beispiele:

### Beispiel 1 - Herstellung eines Klebebands

Ein 20 mm breiter und 220 µm dicker PET Gewebeträger mit einem Flächengewicht von 130 g/m² wurde mit Acrodur® 950 L mit einer Viskosität von ca. 8 Pa·s, eingestellt durch den Verdicker Rheovis PU 1291 (90 wt% Acrodur® 950 L + 10 wt% Rheovis PU 1291), beschichtet. In einem zweiten Beschichtungsschritt wurde eine wässrige, polymere Dispersionsklebmasse, hergestellt aus 99 Gew-%, bezogen auf das Gesamtgewicht des Polymers, 1-Butylacrylat-Monomer und 1 Gew.-%, bezogen auf das Gesamtgewicht des Polymers, Acrylsäure, auf die noch nasse Imprägnierung aufgetragen. Die Trocknung der Dispersionen erfolgte bei 60°C.

### Beispiel 2 - Biegeprüfung zur Ermittlung der Steifigkeit

Ein Prüfmuster, bestehend aus 250 Einzelleitungen mit einem Leitungsquerschnitt von 0,35 mm², wurde mithilfe eines 9 mm breiten Klebebandes (tesa 51618) zu einem Musterleitungssatz gebündelt, so dass der Musterleitungssatz einen Durchmesser von 23±5 mm und eine Länge von 300±50 mm aufwies. Dieser Musterleitungssatz wurde mit dem versteifenden Material spiralförmig umwickelt, wobei ein Überlapp von 50% gewährleistet wurde. Anschließend wurde das versteifende Material mittels Wärme gehärtet.

Der gehärtete Musterleitungssatz wurde einer Biegeprüfung unterzogen, um den Einfluss des versteifenden Materials auf die Steifigkeit zu bestimmen. Die Biegeprüfung wurde an einer Zugprüfmaschine vorgenommen. Dafür wurde der Musterleitungssatz auf zwei Backen mit einem Abstand von 70 mm gelegt und mittig mit einer Druckfinne um einen Weg von 30 mm eingedrückt und belastet. Die für die Verformung des Messwegs nötige Kraft wurde von einer Zugprüfmaschine in Newton aufgezeichnet. Die Prüfgeschwindigkeit betrug 100 mm/min, sowohl bei der Belastung, als auch bei der Entlastung des Musterleitungssatzes. Die Prüfung wurde an 3 verschiedenen Stellen des Leitungssatzes (Anfang, Mitte und Ende) durchgeführt. Die Biegekraft resultiert aus dem Mittelwert der drei Einzelmessungen und wurde in drei Kategorien wie folgt bewertet:

### Bewertungskategorien 3-Punkt Biegeversuch:

- +: gut geeignet für die Anwendung (500-750 N)
- ○: eingeschränkt geeignet für die Anwendung (400-500 N und 700-800 N)
- -: nicht geeignet für die Anwendung (< 400 und > 800 N)

Zum Vergleich wurde ein kommerziell erhältliches Klebeband, tesa® 51036, dem gleichen Versuch unterworfen. Die Ergebnisse sind in der nachfolgenden Tabelle 1 aufgeführt.

### Beispiel 3 - C-Form-Prüfung zur Ermittlung der Steifigkeit bei unterschiedlichen Temperaturen

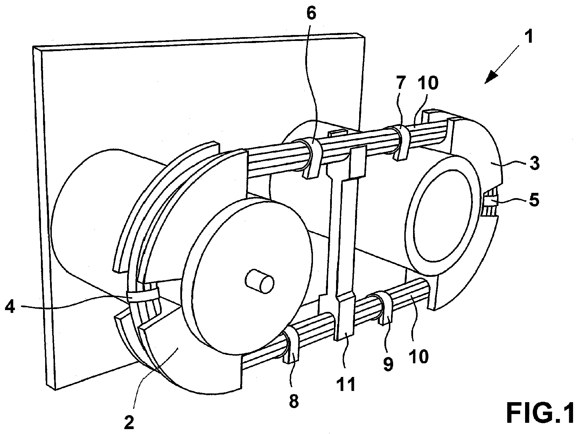

Zur Ermittlung der Steifigkeit eines gebogenen Kabelmusters wurde ein Testverfahren entwickelt (C-Kabelmuster-Biegeprüfung). Zur Herstellung eines C-Kabelmusters (siehe Fig. 1) wird eine Kabelleitung (10) mit einem Leitungsquerschnitt von 0,35 mm² 100 mal um eine Halterung (1) zu einem Musterleitungssatz gewickelt. Die Halterung (1) weist zwei gegenüberliegende, halbkreisförmige Führungen (2, 3) mit einem Durchmesser von 120 mm auf, die mit einem Abstand (A) von etwa 210 mm beabstandet sind. Der gewickelte Kabelsatz ist in **Fig. 1** dargestellt.

Die Zahl der Kabelwicklungen beträgt 100. Es entsteht ein Musterleitungssatz mit einem Durchmesser von 15±5 mm und einem Umfang von 690 mm. An den Apizes der Halbkreissegmente und an jeweils zwei Geradenabschnitten (Schenkeln) wird das Kabelbündel (10) mit Kabelbindern (4, 5, 6, 7, 8, 9) mit einer Zugkraft von 210±10 N zusammengeschnürt und fixiert, so dass das das Kabelbündel (10) nach Herausnahme aus der Halterung eine ausreichende Steifigkeit besitzt, um sich nicht zu verformen. Um sie Steifigkeit des Kabelbündels (10) weiter zu verbessern, wird zwischen den Schenkeln des Kabelbündels eine Stütze (11) positioniert und ebenfalls mit Kabelbindern fixiert.

Das so hergestellte Kabelbündel (10) wird aus der Halterung herausgenommen und mit dem zu prüfenden Klebeband (Breite 19 mm-20 mm) mit einer 50%igen Überlappung umwickelt. Dazu wird mit der Umwicklung an einem Kabelbinder (z.B. 6 oder (7)) des Schenkels in Richtung Kreissegment ((6)->(4) oder (7)->(5)) begonnen. Wenn die Umwicklung den Kabelbinder (4) bzw. (5) am Apex des Halbkreissegments erreicht, wird dieser entfernt und die Wicklung bis zum nächsten Kabelbinder ((4)->(8) bzw. (5)->(9)) des gegenüberliegenden Schenkels fortgeführt. Genauso wird auch an der anderen Seite, am anderen Halbkreissegment verfahren.

Die so präparierten Muster werden der entsprechenden Vernetzungsmethode (thermische Energie, 110°C) zugeführt. Mit einem Seitenschneider werden die Muster, benachbart zu den noch vorhandenen Kabelbindern geschnitten, um zwei "C-förmige" Kabelmuster (C-Kabelmuster) zu erhalten, die an beiden Seiten des halbkreisförmigen, umwickelten Abschnitts jeweils auch einen nicht umwickelten Abschnitt aufweisen. Der Schnitt erfolgt im Abstand des Durchmessers (120 mm) vom Apex des Halbkreissegments, projiziert auf die Kreismitte.

Mit je einem Stück Kabel werden Schlaufen an die Schenkelenden der Muster gebunden, damit sie an dem einen Ende aufgehängt und am anderen Ende ein Gewicht angehängt werden kann. Die verbliebenen Kabelbinder werden jetzt entfernt, da sie das Prüfergebnis verfälschen können. Der Abstand zwischen den Schenkeln wird nun bestimmt.

Eines der beiden Muster wird unter Raumtemperatur gelagert und das andere bei 60°C.

An den jeweiligen unteren Schenkel des "C-Prüflings" wird ein 1 kg-Gewicht gehängt. Nach einer Stunde wird die Auslenkung des Kabelbündels notiert (Auslenkverhalten 1 h bei RT bzw. 60°C) und das Gewicht entfernt. Nach einer Minute wird die Auslenkung erneut bestimmt (Rückstellverhalten 1 min bei RT bzw. 60°C). Nach einer Stunde wird die Auslenkung dann wieder bestimmt und notiert (Rückstellverhalten 1 h bei RT bzw. 60°C) .

Die ermittelten Werte der C-Form-Verformung wurden in drei Kategorien eingestuft, gut geeignet für die Anwendung, eingeschränkt geeignet für die Anwendung und nicht geeignet für die Anwendung. Die Kategorien wurden wie folgt bewertet:

### Bewertungskategorien C-Form-Biegeversuch (Raumtemperatur):

- +: gut geeignet für die Anwendung (< 15% Auslenkung)
- ○: eingeschränkt geeignet für die Anwendung (>15-30%)
- -: nicht geeignet für die Anwendung (>30%)

### Bewertungskategorien C-Form-Biegeversuch (60°C):

- +: gut geeignet für die Anwendung (< 25% Auslenkung)
- ○: eingeschränkt geeignet für die Anwendung (>25-40%)
- -: nicht geeignet für die Anwendung (>40%)

### Bewertungskategorien C-Form-Biegeversuch (Rückstellverhalten bei RT und 60°C):

- +: gut geeignet für die Anwendung (< 10% Auslenkung)
- ○: eingeschränkt geeignet für die Anwendung (10-30%)
- -: nicht geeignet für die Anwendung (>30%)

Zum Vergleich wurde ein kommerziell erhältliches Klebeband, tesa® 51036, dem gleichen Versuch unterworfen. Die Ergebnisse sind ebenfalls in der nachfolgenden Tabelle 1 aufgeführt.

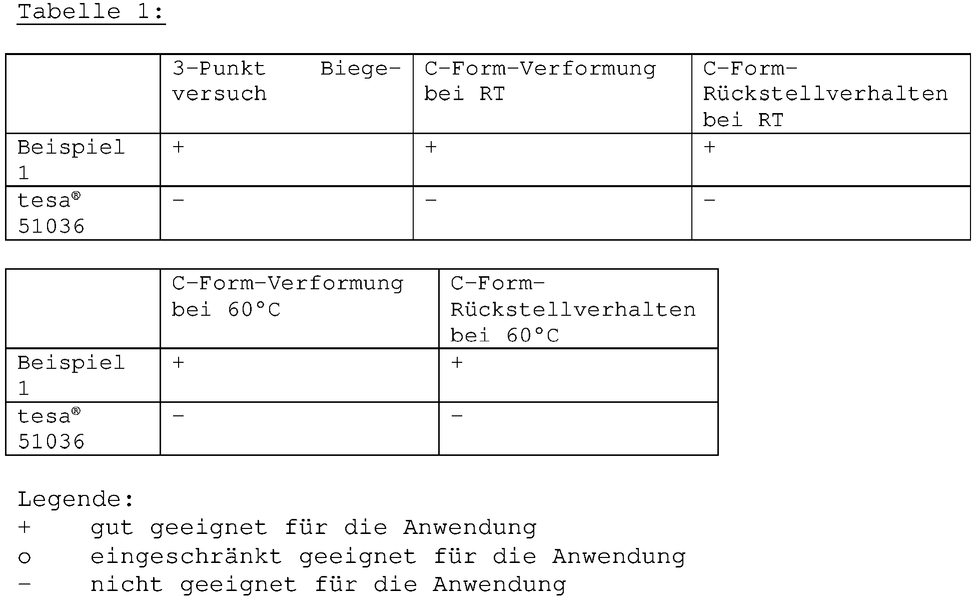

## Patentansprüche

1. Klebeband zum Ummanteln von langgestrecktem Gut, umfassend einen bandförmigen Träger, der auf mindestens einer Seite mit einer selbstklebenden Klebeschicht versehen ist, die aus einem Haftklebestoff besteht, **dadurch gekennzeichnet, dass** der bandförmige Träger auf mindestens der einen Seite zusätzlich mit einem bei einer Temperatur von bis zu 110°C thermisch härtbaren Bindemittel versehen ist.

2. Klebeband nach Anspruch 1, **dadurch gekennzeichnet, dass** das bei einer Temperatur von bis zu 110°C thermisch härtbare Bindemittel ein Polymerisat umfasst, welches zu mindestens 5 Gew.-% aus einer ethylenisch ungesättigten Monocarbonsäure, einer ethylenisch ungesättigten Dicarbonsäure oder einem ethylenisch ungesättigten Dicarbonsäureanhydrid sowie aus mono- oder multifunktionellen Epoxidverbindungen als Härter und zusätzlich einem Polyol oder einem Alkanolamin mit mindestens zwei Hydroxylgruppen aufgebaut ist.

3. Klebeband nach einem der vorgehenden Ansprüche, **dadurch gekennzeichnet, dass** das Bindemittel bei einer Temperatur zwischen 60°C und 110°C thermisch härtbar ist.

4. Klebeband nach einem der vorgehenden Ansprüche, **dadurch gekennzeichnet, dass** das Bindemittel eine formaldehydfreie Harzlösung aus modifizierter Polyacrylsäure und einem mehrwertigen Alkohol ist.

5. Klebeband nach einem der vorangehenden Ansprüche, **dadurch gekennzeichnet, dass** das Trägermaterial ein Polyestervlies umfasst.

6. Klebeband nach einem der vorangehenden Ansprüche, **dadurch gekennzeichnet, dass** das die Klebemasse zu mehr als 10%, in den Träger eingesunken ist.

7. Verfahren zum Ummanteln von langgestrecktem Gut wie insbesondere Leitungen oder Kabelsätzen, wobei ein Klebeband gemäß einem der vorangehenden Ansprüche in einer Schraubenlinie um das langgestreckte Gut geführt wird oder das langgestreckte Gut in axialer Richtung von dem Klebeband umhüllt wird, das langgestreckte Gut mitsamt dem umhüllenden Klebeband in die gewünschte Anordnung, insbesondere in den Kabelsatzplan gebracht wird, das langgestreckte Gut in dieser Anordnung gehalten wird, die aushärtbare Klebemasse durch die Zufuhr von thermischer Energie bei einer Temperatur von bis zu 110°C zum Aushärten gebracht wird.

8. Verfahren nach Anspruch 7, **dadurch gekennzeichnet, dass** aushärtbare Klebemasse durch die Zufuhr von thermischer Energie bei einer Temperatur von 60°C bis 110°C zum Aushärten gebracht wird.

9. Verfahren nach Anspruch 7 oder 8, **dadurch gekennzeichnet, dass** die thermische Energie über einen Zeitraum von 0,5 Sek. bis 10 Min. zugeführt wird.

10. Kabelstrang, der mit einem Klebeband gemäß einem der Ansprüche 1 bis 6 ummantelt ist oder nach einem Verfahren gemäß einem der Patentansprüche 7 bis 9 herstellbar ist.
